# EUROPEAN PATENT SPECIFICATION

(11) **EP 3 813 541 B1**
(45) Date of publication and mention of the grant of the patent: **03.07.2024**
(21) Application number: 18793356.9
(22) Date of filing: 17.09.2018
(51) Int. Cl.: A23G 9/08, A23G 9/28

(54) **A MACHINE FOR REPEATED PRODUCTION OF ICE CREAM IN SMALL DOSES**
MASCHINE ZUR WIEDERHOLTEN HERSTELLUNG VON SPEISEEIS IN KLEINEN DOSEN
MACHINE DE PRODUCTION RÉPÉTÉE DE CRÈME GLACÉE EN PETITES DOSES

(30) Priority: 29.06.2018 CZ 201835125 U
(43) Date of publication of application: 05.05.2021
(73) Proprietor: Jarriba, a.s., 664 83 (CZ)
(72) Inventor: HAVEL, Jiri, 51233 (CZ)
(74) Representative: Spacek, Jindrich
(86) International application number: PCT/CZ2018/000046
(87) International publication number: WO 2020/001666

(56) References cited:
- WO-A1-98/57552
- WO-A1-2007/045516
- CH-A5- 584 516
- GB-A- 1 047 580
- GB-A- 1 145 807
- US-A- 165 615
- US-A- 1 535 871
- US-A- 2 806 679
- US-A- 2 931 193
- US-A- 3 829 242

## Description

### Field of the Invention

The invention relates to a machine designed for repeated production of ice cream in small doses.

### State of the Art

The existing machines for production of ice cream are designed and used to produce large quantities of ice cream, often resulting in problems, especially when the consumption/sale of ice cream portion number is not as expected, and a large amount of ice cream remains in the machine. The existing machines produce the ice cream mixture from a liquid phase that is poured into containers in the machine, from where it is transported to the freezing cylinders, where it is frozen to about -10°C. The frozen ice cream is distributed through a mold into cones or cups using pump pressure or screws. This operation requires relatively experienced and skilled operator, who is difficult to hire in the current shortage of labour force. The existing machines differ only in size, performance, and perhaps type of a pump used, which introduces air into the ice cream to create so-called whip. The whole process from mixing the ice cream, through pouring it into the machine and freezing to drawing it, to a customer and washing the machine is based on the operator's capabilities. In addition, operational maintenance of the machine, such as washing thereof, is a problem as well. Washing such machine, which must be carried out within the interval of one to three days, is often so complicated that it cannot be performed by the machine operator who dispenses the ice cream but is carried out by a trained operator or owner of the machine.

There are also very complicated automated machines performing most of the operations described instead of an operator, but these are very large, complex and expensive robots that are not affordable for the most of ice cream sellers. Disadvantages of the machines for production of ice cream used currently, regardless of which manufacturer, can be described as follows:
The current machines produce about 10-20 portions of ice cream at one time, therefore, there is an almost unsolvable problem what to do with the ice cream remained in the machine after finishing the sale. Thus, such remaining ice cream is frozen, re-cooked and preserved otherwise using various technological processes to be used the next day. The problem persists if there is no sale of the ice cream the next day. If the manufacturer follows the required standards and procedures for the production of and handling the ice cream, the use of existing machines under the circumstances described results in great economic losses.

An ideal solution would consist in possibility to produce only one portion at one time, quickly and efficiently in terms of energy and in possibility to wash the machine in a simple manner.

CH 584 516 A5 discloses a household ice cream maker that has an insertable cold cartridge, provided with a free inner space of constant cross-section in which a piston and piston rod can be raised and lowered. The piston is pref. formed as a perforated disc which when raised and lowered permits the ice cream to be displaced from one side to the other without difficulty. The ice cream producing apparatus is of very simple construction, easy to operate and to clean and can be produced at a relatively low price.

### Summary of the Invention

Summary of the invention consists in provision of a machine that produces only one dose/portion of ice cream always at one time; and this ice cream is produced from a non-frozen liquid ice cream, for example from a Terapack; and after taking this single dose/portion of the ice cream, the machine can be initiated by an operator to produce another portion or according to a programmed algorithm, the machine can wash itself after the specified number of portions of ice cream has been produced. Therefore, the machine is equipped with a programmable control device (hereinafter referred to as "computer"), which can determine the number of ice-cream portions produced successively depending on the set mode and can initiate machine washing as well. As the machine is of very small dimension, the machine washing is effective even in short intervals. The machine can produce single portion of ice cream in a very short period of time, in a simple way, without human labor. One portion in order the machine can be washed automatically even after such one portion, until there is a request for production of a next portion within a specified time, again without human labor, that is, without operator. The invention provides a machine for repeated production of ice cream in small doses. Basis of the machine is a body and there are two linearly movable pistons in the cavity thereof located above each other. The lower piston showing a relatively high clearance to the body cavity is provided with a set of small through-holes. The upper piston is aligned precisely with the body cavity, although it can move linearly in the body cavity. Each piston is provided with a hollow piston rod. The hollow piston rod of the lower perforated piston, provided with a cavity for air or liquid supply, is positioned coaxially and movably in the cavity of the hollow piston rod of the upper piston being aligned precisely. Each of the two piston rods is connected to its own linear servo motor controlling the movement thereof and, thus, the movement of the piston based on the computer command. The bottom of the body is provided with a hole for non-frozen liquid ice cream supply, provided with a control pre-valve.

The hole for dispensing the finished ice cream is provided with a valve as well. The lid of the body is provided with a guiding hole for the piston rod of the upper piston being aligned precisely. In the most often embodiment, the body will comprise a cylinder with an internal cylindrical cavity. The cylindrical body will be with either single-jacket or double-jacket with a cavity between the two jackets. This cavity is possible to house a cooling screw tubes or a coolant can be let flow through the cavity. From outside, the body may be provided with thermal insulation, in the case the body is cooled from the jacket inside.

Most often, the body is made as a stainless steel cylinder of a diameter of only about 50 mm and a height of about 250 mm. This small body requires a very low volume of coolant to be cooled down, allowing compliance with EU regulations on the type and volume of coolants even after 2020.

### Description of the Drawings

Further advantages and effects of the present invention are apparent from the accompanying drawing indicating:

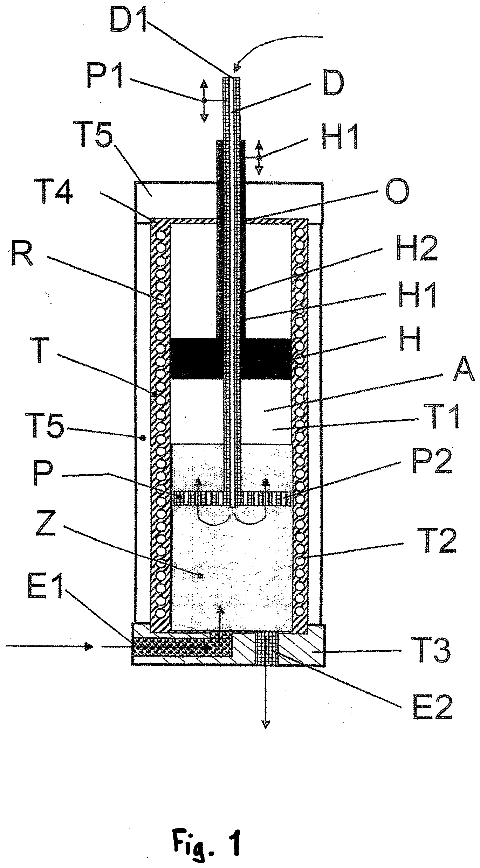

Fig. 1 shows a cross-section of the machine for repeated production of ice cream in small doses; the body has a cylindrical shape provided with thermal insulation from outside, the two piston rods are coaxial.

### Example of Invention Embodiment

The example of the embodiment shown below is only one of the possible embodiments of the present invention. As shown in Fig. 1, the machine for repeated production of ice cream **Z** in small doses comprises of a hollow cylindrical body **T,** the cavity **T1** of which houses two linearly movable pistons **P** and **H.** The lower perforated piston **P** is provided with a set of through-holes **P2** and is coupled firmly to its hollow piston rod **P1** provided with the through-hole **D,** through which the tube **D1** for air or liquid supply passes. The lower perforated piston **P** is aligned with a large clearance against the cavity **T1** of the body **T**. The upper piston **H** is aligned precisely against the cavity **T1** of the body **T,** however, with a possibility of linear movement. The hollow piston rod **P1** of the lower perforated piston **P** having the cavity **D** for air or liquid supply through the tube **D1** is positioned coaxially and moveably in the cavity **H2** of the hollow piston rod **H1** of the upper piston **H.** The bottom **T3** of the body **T** is provided with the opening **E1** for non-frozen liquid ice cream supply, provided with a control pre-valve (not shown).

The opening for dispensing the finished ice cream **E2** is provided with a valve as well (not shown). The lid **T4** of the body **T** is provided with a guiding hole **O** for the hollow piston rod **H1** of the upper piston **H.** The hollow piston rod **H1** is connected to a linear servo motor (not shown) as well as the hollow piston rod **P1** is connected to its linear servo motor (not shown). The servo motors and control valves are connected to a control computer. In the described embodiment, the body **T** has a double-shell **T2** housing the distribution system **R** of the coolant. The body **T** is provided with external thermal insulation **T5** from outside. The machine can be installed in a suitable stand and operated separately or can be built-in, in parallel, with several pieces into a larger equipment.

The machine function is as follows:
The entire machine is cooled and will be kept at temperature of about +2 °C in order to prepare the ice cream **Z** faster and to maintain the preservation temperature of the ice cream **Z.** It is followed by drawing in single dose of non-frozen liquid ice cream so that the upper piston **H** moves upward in the cavity **T1** of the body **T.** Supply to the tube **D1** is closed, the opening for dispensing the finished ice cream **E2** is closed as well. By vacuum created, the non-frozen liquid ice cream is drawn in through the opening **E1** from a bag or from another container into the cavity **T1** of the body **T.** The size of the non-frozen liquid ice cream dose is determined by the top position of the upper piston **H** in the cavity **T1** of the body **T.** This position can be set (programmed by a computer). After drawing in the non-frozen liquid ice cream, the phase of ice cream **Z** whipping follows. Both the opening **E1** and the opening for dispensing the finished ice cream **E2** are closed and the air begins to be introduced into the non-frozen liquid ice cream through the tube **D1** under the lower perforated piston **P.** The lower perforated piston **P** starts to move upward and downward alternately and the non-frozen liquid ice cream along with the air flows through the set of holes **P2,** thereby whipping into the finished ice cream **Z.** This increases the volume of the ice cream **Z** and, therefore, the upper piston **H** has to move back upward. Since all the air is not possible to introduce into the ice cream **Z,** there is a gap full of air **A** between the upper level of the whipped ice cream **Z** and the upper piston **H** (moving back upward due to the ice cream). Freezing is the next phase of production of the ice cream **Z.** This phase takes place immediately after starting the drawing in of non-frozen liquid ice cream. Since the volume of the ice cream **Z** in the cavity **T1** of the body **T** is low, the entire freezing process with continuous whip formation takes tens of seconds as a maximum. As soon as an operator or a computer switches off the freezing, the upper piston **H** starts to move downward, and the air **A** located above the ice cream **Z** is compressed to the set pressure. Then, the computer initiates the opening for dispensing the finished ice cream **E2** to open and the computer dispenses the ice cream **Z** through a mold into a cup via a linear motor using the piston **H.** Value of the air **A** pressure acting on the ice cream **Z** can be adjusted to achieve the desired size of the whip.

After completing the dispense of the ice cream **Z,** the machine can be washed automatically either after each portion of the ice cream **Z** or at any interval, as required by an operator or a computer. When washing the machine, the upper piston **H** moves up to the top position. Washing fluid instead of the air is sprayed into the cavity **T1** of the body **T** through the tube **D1.** Then, the upper piston **H** moves downwards and upwards, while the lower perforated piston **P** moves downwards. After the specified time, the opening for dispensing the ice cream **E2** opens and the washing fluid is drained. The opening **E1** is closed during the whole wash cycle. The air can be used instead of the washing fluid, or both these media can be combined.

If the non-frozen liquid ice cream as a semi-finished product for ice cream production is supplied in a bag, the connection between the bag and the body **T** including the opening **E1** for non-frozen liquid ice cream supply have to be rinsed. The same must be done if the non-frozen liquid ice cream is supplied in a tub.

If the machine described above is operated in a pair, it is possible to dispense two kinds of the ice cream **Z** or a mixture of both of the kinds. It offers a possibility to operate multiple machines side by side, preferably in a form of compact automatic device. Each individual machine or compact automated device can be connected over any data network with a control center and address remotely the logistic and service needs of the machines being operated.

## Claims

1. The machine for repeated production of ice cream in small doses, comprises a body (T), wherein cavity (T1) thereof houses two linearly movable pistons (P, H) located above each other, the lower perforated piston (P) having a set of through-holes (P2) and a piston rod (P1) and the upper piston (H) having a piston rod (H1), wherein the hollow piston rod (P1) of the lower perforated piston (P) with cavity (D) for air or liquid supply runs through the upper piston (H) and is parallel to the piston rod (H1) of the upper piston (H), while the bottom (T3) of the body (T) is provided with the opening (E1) for non-frozen liquid ice cream supply with a servo pre-valve and lockable opening (E2) for dispensing the finished ice cream (Z), wherein the lid (T4) of the body (T) is provided at least one guiding hole (O) for the piston rods (P, H), **characterized in that** the cavity (T1) of the body (T), where two linearly movable pistons (P, H) are located above each other, the lower perforated piston (P) having hollow piston rod (P1) and the upper piston (H) having hollow piston rod (H1) houses the hollow piston rod (P1) of the lower perforated piston (P) with the cavity (D) for air or liquid supply, which is positioned coaxially and movably in the cavity (H2) of the hollow piston rod (H1) of the upper piston (H).

2. The machine according to claim 1, **characterized in that** the body (T) has double jacket (T2) housing distribution system (R) of a coolant.

3. The machine according to claims 1 to 2, **characterized in that** the body (T) is provided with external thermal insulation (T5) from outside.

## Patentansprüche

1. Die Maschine zur wiederholten Herstellung von Speiseeis in kleinen Dosen umfasst einen Körper (T), in dessen Hohlraum (T1) zwei linear bewegliche, übereinander angeordnete Kolben (P, H) untergebracht sind, wobei der untere gelochte Kolben (P) einen Satz von Durchgangslöchern (P2) und eine Kolbenstange (P1) und der obere Kolben (H) eine Kolbenstange (H1) aufweist, wobei die hohle Kolbenstange (P1) des unteren perforierten Kolbens (P) mit dem Hohlraum (D) für die Zufuhr von Luft oder Flüssigkeit durch den oberen Kolben (H) verläuft und parallel zur Kolbenstange (H1) des oberen Kolbens (H) ist, während der Boden (T3) des Körpers (T) mit der Öffnung (E1) für die Zufuhr von nicht gefrorenem Flüssigeis mit einem Servovorventil und einer verschließbaren Öffnung (E2) für die Ausgabe des fertigen Eises (Z) versehen ist, wobei der Deckel (T4) des Körpers (T) mit mindestens einem Führungsloch (O) für die Kolbenstangen (P, H) versehen ist, **dadurch gekennzeichnet, dass** der Hohlraum (T1) des Körpers (T), in dem zwei linear bewegliche Kolben (P, H) übereinander angeordnet sind, wobei der untere perforierte Kolben (P) eine hohle Kolbenstange (P1) und der obere Kolben (H) eine hohle Kolbenstange (H1) aufweist, die hohle Kolbenstange (P1) des unteren perforierten Kolbens (P) mit dem Hohlraum (D) für die Luft- oder Flüssigkeitszufuhr aufnimmt, der koaxial und beweglich in dem Hohlraum (H2) der hohlen Kolbenstange (H1) des oberen Kolbens (H) angeordnet ist.

2. Maschine nach Anspruch 1, **dadurch gekennzeichnet, dass** der Körper (T) einen Doppelmantel (T2) aufweist, der das Verteilersystem (R) eines Kühlmittels aufnimmt.

3. Maschine nach einem der Ansprüche 1 bis 2, **dadurch gekennzeichnet, dass** der Körper (T) von außen mit einer Wärmedämmung (T5) versehen ist.

## Revendications

1. Machine de production répétée de crème glacée en petites doses comprenant un corps (T), la cavité (T1) de celui-ci abrite deux pistons (P, H) mobiles linéairement situés l'un au-dessus de l'autre, un piston inférieur perforé (P) ayant un ensemble de trous traversants (P2) et une tige de piston (P1) et un piston supérieur (H) ayant une tige de piston (H1), la tige de piston creuse (P1) du piston inférieur perforé (P) comportant une cavité (D) pour l'alimentation en air ou en liquide traverse le piston supérieur (H) et est parallèle à la tige de piston (H1) du piston supérieur (H), tandis que le fond (T3) du corps (T) est pourvu d'une ouverture (E1) pour l'alimentation en glace liquide non congelée, avec une pré-valve servo et une ouverture verrouillable (E2) pour la distribution de la glace finie (Z), où le couvercle (T4) du corps (T) est pourvu d'au moins un trou de guidage (O) pour les tiges de piston (P, H), **caractérisé en ce que** la cavité (T1) du corps (T), où les deux pistons (P, H) mobiles sont situés linéairement l'un au-dessus de l'autre, le piston inférieur perforé (P) ayant une tige de piston creuse (P1) et le piston supérieur (H) ayant une tige de piston creuse (H1), abrite la tige de piston creuse (P1) du piston inférieur perforé (P) avec la cavité (D) pour l'alimentation en air ou en liquide, qui est positionnée de manière coaxiale et mobile dans la cavité (H2) de la tige de piston creuse (H1) du piston supérieur (H).

2. Machine selon la revendication 1, **caractérisée en ce que** le corps (T) comporte une double enveloppe (T2) abritant un système de distribution (R) d'un liquide de refroidissement.

3. Machine selon les revendications 1 à 2, **caractérisée en ce que** le corps (T) est pourvu de l'extérieur d'une isolation thermique externe (T5).
